# FASCICULE DE BREVET EUROPEEN

(11) **EP 3 744 550 B1**
(45) Date de publication et mention de la délivrance du brevet: **29.06.2022**
(21) Numéro de dépôt: 20177563.2
(22) Date de dépôt: 29.05.2020
(51) Int. Cl.: B60K 11/08

(54) **DISPOSITIF D'AÉRATION À PLURALITÉ DE ZONES ET VÉHICULE ASSOCIÉ**
BELÜFTUNGSVORRICHTUNG MIT EINER VIELZAHL VON ZONEN, UND ENTSPRECHENDES FAHRZEUG
VENTILATION DEVICE WITH A PLURALITY OF AREAS AND ASSOCIATED VEHICLE

(30) Priorité: 29.05.2019 FR 1905710
(43) Date de publication de la demande: 02.12.2020
(73) Titulaire: Flex-N-Gate France, 25405 Audincourt (FR)
(72) Inventeur: GUYON, Cyrille, 25600 NOMMAY (FR); DUQUESNOY, David, 70400 CHALONVILLARS (FR)
(74) Mandataire: Lavoix

(56) Documents cités:
- WO-A1-2018/229402
- DE-A1-102016 219 057
- DE-U1-202011 050 523
- DE-U1-202017 106 531
- FR-A1- 3 022 878
- JP-A- 2013 199 178

## Description

La présente invention concerne un dispositif d'aération pour un véhicule comprenant un cadre définissant une ouverture et un dispositif d'obturation de l'ouverture, le dispositif d'aération présentant une première zone, le dispositif d'obturation comprenant au moins un volet d'obturation principal apte à obturer la première zone, l'au moins un volet d'obturation principal étant apte à entrer en rotation autour d'un premier axe de rotation s'étendant selon une unique première direction de rotation.

La présente invention concerne en outre un véhicule comprenant un tel dispositif d'aération.

L'invention concerne plus particulièrement un dispositif d'aération destiné à gérer des flux d'air d'un véhicule automobile. Ce système peut avantageusement être utilisé pour la gestion de la température du moteur du véhicule.

Les documents DE 20 2017 106531 U1, JP 2013 199178 A, DE 10 2016 219057 A1, DE 20 2011 050523 U1 et WO 2018/229402 décrivent des dispositifs d'aération avec des volets d'obturation.

Un tel dispositif d'aération est par exemple agencé à l'avant du véhicule. Le dispositif d'aération permet la gestion d'un flux d'air entrant et destiné à être en contact avec le radiateur et permettant de maintenir le moteur à la température optimale de fonctionnement. Ce dispositif connu permet avantageusement de combiner une forme aérodynamique performante du véhicule et un ajustement de la température de fonctionnement du moteur.

Cependant, de tels systèmes ne sont pas compatibles avec une intégration sur une peau de pare-chocs ou une grille présentent une ou plusieurs courbures.

L'un des buts de l'invention est de proposer un dispositif d'aération pour un véhicule qui serait compatible avec une intégration sur une peau de pare-chocs ou une grille présentent une ou plusieurs courbures.

A cet effet, l'invention a pour objet un dispositif d'aération pour un véhicule comprenant un cadre définissant une ouvertureet un dispositif d'obturation de l'ouverture , le dispositif d'aération présentant une première zone, le dispositif d'obturation comprenant au moins un volet d'obturation principal apte à obturer la première zone, l'au moins un volet d'obturation principal étant apte à entrer en rotation autour d'un premier axe de rotation s'étendant selon une unique première direction de rotation, ledit dispositif étant caractérisé en ce qu'il présente deux deuxièmes zones, la première zone étant une zone centrale, les deux deuxièmes zones étant des zones latérales situées de part et d'autre de la zone centrale selon une direction transversale, le dispositif d'obturation comprenant au moins un volet d'obturation secondaire apte à obturer les deuxièmes zones, l'au moins un volet d'obturation secondaire étant apte à entrer en rotation autour d'un deuxième axe de rotation s'étendant selon une unique deuxième direction de rotation pour chaque deuxième zone, la deuxième direction de rotation de chaque deuxième zone étant distincte de la première direction de rotation, la norme de la composante selon une direction d'élévation d'un vecteur de la deuxième direction de rotation étant strictement supérieure à la norme de chacune des composantes du vecteur selon des directions orthogonales à la direction d'élévation pour chaque deuxième zone.

Un tel dispositif d'aération est plus facilement intégrable sur une peau de pare-chocs ou une grille présentent une ou plusieurs courbures, les différentes zones pouvant être agencées de manière à respecter la ou les courbures.

Par ailleurs, un tel dispositif permet de gérer des flux d'air selon différentes directions et, ainsi, une gestion améliorée de la température du moteur et/ou d'autres éléments que le moteur.

Le dispositif d'aération peut en outre présenter une ou plusieurs des caractéristiques ci-dessous, considérée(s) individuellement ou selon toutes les combinaisons techniquement possibles en conformité avec les revendications:
- la rotation de l'au moins un volet d'obturation secondaire apte à obturer une première des zones latérales est actionnable indépendamment de la rotation de l'au moins un volet d'obturation secondaire apte à obturer une deuxième des zones latérales ;
- le dispositif d'aération présente un plan médian de symétrie perpendiculaire à une direction transversale ;
- la première direction de rotation est parallèle à une direction transversale à 5° près ;
- la norme de la composante selon une direction d'élévation d'un vecteur de la deuxième direction de rotation strictement supérieure à la norme de l'addition des composantes du vecteur selon les directions orthogonales à la direction d'élévation ;
- la rotation de l'au moins un volet d'obturation principal est contrôlé par au moins un premier système d'actionnement, la rotation de l'au moins un volet d'obturation secondaire étant contrôlé par au moins un deuxième système d'actionnement ; et/ou
- l'au moins un volet d'obturation principal est incurvé et/ou l'au moins un volet d'obturation secondaire est incurvé.

L'invention concerne en outre un véhicule comprenant un dispositif d'aération tel que défini précédemment.

Le véhicule, dans un mode de réalisation particulier, présente la caractéristique suivante : le dispositif d'aération définit une surface externe du véhicule, la surface externe étant visible depuis l'extérieur du véhicule.

D'autres caractéristiques et avantages de l'invention ressortiront de la description détaillée qui en est donnée ci-dessous, à titre indicatif et nullement limitatif, en référence aux figures annexées, parmi lesquelles :
[Fig 1] la figure 1 est une vue schématique d'une moitié de la face avant d'une partie avant d'un véhicule selon un premier mode de réalisation de l'invention, les volets d'obturation primaire et secondaire étant fermés,
[Fig 2] la figure 2 est une vue schématique d'une moitié de la face arrière de la partie avant de la figure 1, le volet d'obturation primaire étant ouvert et le volet d'obturation secondaire étant fermé,
[Fig 3] la figure 3 est une vue schématique en perspective d'une moitié de la face arrière de la partie avant de la figure 1, les volets d'obturation primaire et secondaire étant ouverts,
[Fig 4] la figure 4 est une vue en coupe selon le plan π du volet d'obturation primaire et de la grille de la partie avant de la figure 1, et
[Fig 5] la figure 5 est une vue schématique d'une moitié de la face avant d'une partie avant d'un véhicule selon un deuxième mode de réalisation, les volets d'obturation primaire et secondaire étant ouverts.

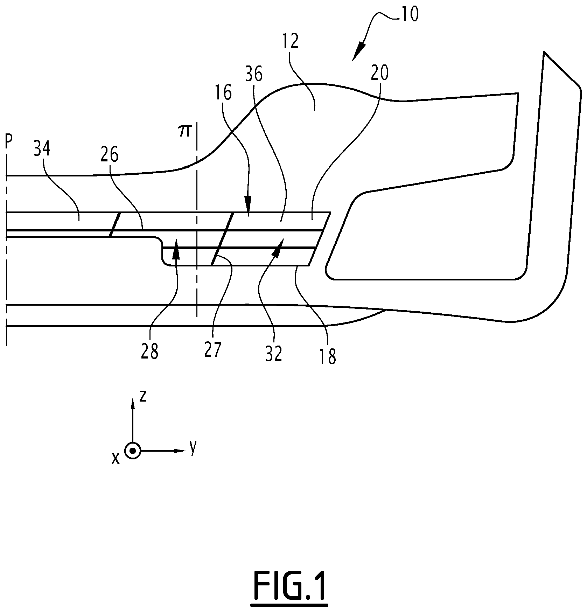

Une partie avant 10 d'un véhicule selon un premier mode de réalisation est représentée sur les figures 1 à 4.

On définit la direction transversale Y comme la direction d'extension de chacun des essieux du véhicule, la direction d'élévation Z comme la direction perpendiculaire au plan de roulement du véhicule et la direction longitudinale X comme la direction perpendiculaire aux directions transversale Y et d'élévation Z.

On entend par « avant », « arrière » et « gauche », « droite » et « inférieur », « supérieur » les sens usuels pour un véhicule respectivement selon les directions longitudinale X, transversale Y et d'élévation Z.

La partie avant 10 présente une face extérieure 12 visible depuis l'extérieur du véhicule et une face arrière 14.

La partie avant 10 comprend un dispositif d'aération 16.

Le dispositif d'aération 16 est par exemple destiné à faire partie d'une grille ou d'une peau de pare-chocs d'un véhicule pour admettre de l'air extérieur pour refroidir un dispositif de refroidissement du véhicule à travers une ouverture d'entrée d'air.

Le dispositif d'aération 16 présente un plan médian P de symétrie perpendiculaire à la direction transversale Y.

Le dispositif d'aération 16 comprend un cadre 18 et un dispositif d'obturation 20.

Le cadre 18 définit une ouverture 22. L'ouverture 22 permet une entrée d'air dans le véhicule.

L'ouverture 22 présente un bord inférieur, un bord supérieur et deux bords latéraux. Chaque bord latéral relie le bord inférieur et le bord supérieur en une extrémité respective de l'ouverture 22 selon la direction transversale Y.

Le cadre 18 est, par exemple, incurvé au niveau de l'ouverture 22. Plus particulièrement, le bord inférieur et le bord supérieur de l'ouverture 22 s'étendent sensiblement selon la direction transversale Y dans une portion centrale et sont incurvés selon la direction longitudinale X à chacune de leurs extrémités.

Selon le mode de réalisation représenté, le cadre 18 est formé par le pare-chocs.

Ainsi, l'ouverture 22 est par exemple formée dans une peau de pare-chocs du véhicule.

En variante, le cadre 18 est formé par un module du véhicule et/ou par une pièce destinée à être monté sur le véhicule.

Le dispositif d'aération 16 comprend en outre ici une armature 24.

L'armature 24 comprend un pourtour et une grille 26. Le pourtour a une forme similaire au cadre et fixé au cadre ou forme le cadre 18. La grille 26 permet notamment d'améliorer l'aspect visuel par un effet stylistique spécifique, par exemple par peinture de la grille, et/ou d'empêcher l'intrusion d'objets comme des pierres dans le compartiment derrière, ici le compartiment moteur.

La grille 26 s'étend dans l'espace défini par l'ouverture 22.

L'armature 24, plus particulièrement la grille 26, comprend deux baguettes 27 d'interface, plus particulièrement une baguette d'interface de chaque côté du plan médian P.

Chaque baguette 27 d'interface relie le bord inférieur et le bord supérieur de l'ouverture 22.

Le dispositif d'aération 16 présente une première zone 28 et au moins une deuxième zone 30, 32.

Dans l'exemple représenté, le dispositif d'aération 16 présente une première zone 28 appelée zone centrale et deux deuxièmes zones 30, 32 appelées zones latérales.

La zone centrale 28 s'étend au centre du dispositif d'aération 16 selon la direction transversale Y. En particulier, le plan médian P coupe la zone centrale 28.

La zone centrale 28 s'étend entre chacune des baguettes d'interface 27, le bord inférieur et le bord supérieure de l'ouverture 22.

Les deux deuxièmes zones 30, 32 sont situées de part et d'autre de la zone centrale 28 selon la direction transversale Y.

Chacune des zones latérales s'étend entre le bord inférieur et le bord supérieure de l'ouverture 22, une des baguettes d'interface 27 et un bord latéral de l'ouverture 22.

Le dispositif d'obturation 20 est apte à obturer l'ouverture 22, plus particulièrement l'ensemble de la surface de l'ouverture 22.

Le dispositif d'obturation 20 comprend au moins un volet d'obturation principal 34, plus particulièrement ici un unique volet d'obturation principal, apte à obturer la zone centrale 28, et au moins un volet d'obturation secondaire 36 apte à obturer la ou chaque deuxième zone 30, 32.

Dans l'exemple représenté, l'au moins un volet d'obturation principal 34 est incurvé, de sorte à suivre la courbure du cadre 18.

Plus particulièrement, le volet d'obturation principal 34 comprend une portion centrale et des portions latérales situées de part et d'autre de la portion centrale selon la direction transversale Y. Dans la portion centrale, le volet s'étend sensiblement selon la direction transversale Y ; plus particulièrement, le volet a un rayon de courbure plus important que dans les zones latérales. Dans chaque portion latérale, le volet a un rayon de courbure moins important que dans la zone centrale, de sorte que les portions latérales sont plus incurvées que la portion centrale.

Le volet d'obturation principal 34 est apte à entrer en rotation autour d'un premier axe de rotation A s'étendant selon une première direction de rotation, plus particulièrement entre une position d'obturation et au moins une position ouverte.

La première direction de rotation est ici parallèle à la direction transversale Y à 5° près, plus particulièrement est parallèle à la direction transversale Y.

En cas de pluralité de volets d'obturation principaux, chaque volet d'obturation principal est apte à entrer en rotation autour d'un premier axe de rotation respectif, l'ensemble des premiers axes de rotation respectifs étant parallèles entre eux.

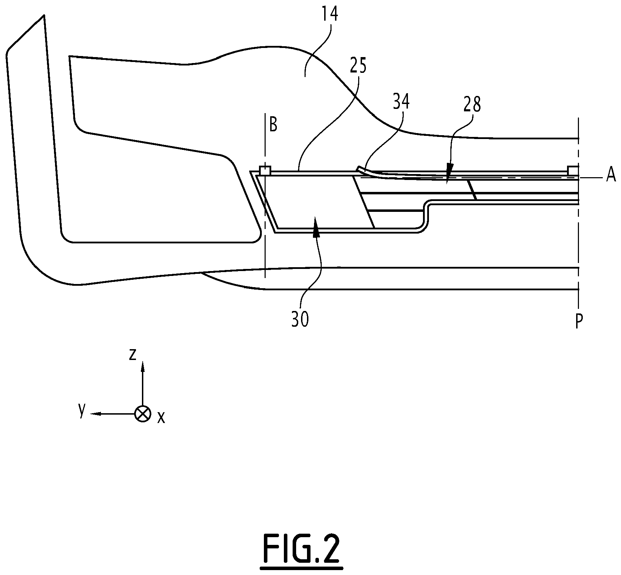

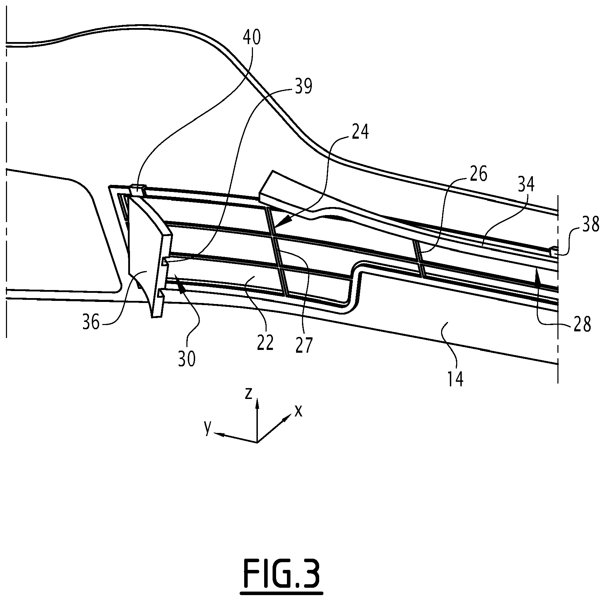

Dans la position ouverte visible sur les figures 2 et 3, l'ouverture 22 est au moins en partie ouverte dans la zone centrale 28, de telle sorte qu'un flux d'air peut circuler au travers de la zone centrale 28 de l'ouverture 22.

Le flux d'air est notamment utile dans la régulation de la température de la chaine de traction comprenant notamment le moteur thermique et/ou la batterie d'hybridation.

Plus particulièrement, dans la position ouverte, l'ouverture 22 est ici totalement ouverte dans la zone centrale 28, c'est-à-dire que le ou les volets d'obturation principaux ne s'étendent pas en regard de la zone centrale 28 de l'ouverture 22 selon la direction longitudinale X.

Dans la position ouverte, le ou les volets d'obturation principaux sont susceptibles de servir de guide d'air et/ou de convergent.

Dans la position d'obturation visible sur la figure 1, le ou l'ensemble des volets d'obturation principaux obture l'ensemble de la zone centrale 28, c'est-à-dire ici la zone entre chacune des baguettes d'interface 27, le bord inférieur et le bord supérieur de l'ouverture 22.

Le ou les volets d'obturation principaux s'étendent dans l'espace, plan ou courbe, défini par l'ouverture dans la zone centrale 28.

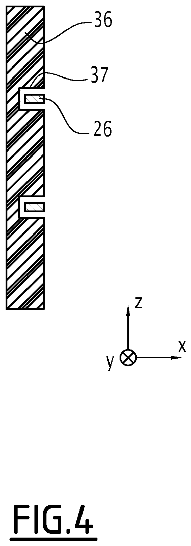

Le ou les volets d'obturation principaux 34 présentent des éléments en creux 37 complémentaires de la grille 26 dans la zone centrale 28, de sorte qu'en position d'obturation du ou des volets d'obturation principaux, la grille s'étend dans les éléments en creux 37, comme visible sur la figure 4.

La grille 26 permet alors l'accostage du ou des volets d'obturation principaux en position d'obturation.

Dans la position d'obturation, une face du volet d'obturation principal est orientée contre la direction du flux d'air. Cela permet avantageusement d'améliorer le coefficient de trainée Cx du véhicule dans la position d'obturation.

Alternativement, dans la position d'obturation, le ou l'ensemble des volets d'obturation principaux obture seulement partiellement l'ensemble de la zone centrale 28, c'est-à-dire qu'un flux d'air peut circuler au travers de la zone centrale 28 de l'ouverture 22, mais que le dispositif d'aération présente une surface de passage de l'air dans la zone centrale 28 strictement inférieure à la surface de passage de l'air dans la zone centrale 28 dans la position ouverte.

Il est défini un angle de rotation du volet d'obturation principal 34 entre la position ouverte et la position d'obturation autour du premier axe de rotation A.

Par exemple, l'angle de rotation est sensiblement égal à 90°.

Par exemple, le volet d'obturation principal 34 est en un polymère.

En variante, le volet d'obturation principal 34 est en métal.

Le dispositif d'obturation comprend en outre ici un premier système d'actionnement 38 prévu pour contrôler la rotation du volet d'obturation principal 34.

Dans un mode de réalisation dans lequel le dispositif d'obturation comprend plusieurs volets d'obturation principaux, le premier système d'actionnement contrôle, par exemple, un des volets d'obturation principaux, les autres volets d'obturation principaux étant entraînés par ledit volet d'obturation principal par des éléments de connexion reliant les volets d'obturation principaux entre eux. Alternativement, chaque volet d'obturation principal est contrôlé par un premier système d'actionnement respectif.

Le dispositif d'obturation 34 comprend ici un unique volet d'obturation secondaire 36 par deuxième zone. Chaque volet d'obturation secondaire 36 est apte à obturer la deuxième zone correspondante, ici une des zones latérales 30, 32.

Le ou les volets d'obturation secondaire 36 d'une deuxième zone présente une forme complémentaire de ladite deuxième zone 30, 32.

Le volet d'obturation secondaire 36 est, par exemple, incurvé. Plus particulièrement, le volet d'obturation secondaire 36 présente une courbure similaire à celle de l'ouverture 22 dans la deuxième zone correspondante 30, 32.

Chaque volet d'obturation secondaire 36 est apte à entrer en rotation autour d'un deuxième axe de rotation B respectif, plus particulièrement entre une position d'obturation et au moins une position ouverte.

Pour chaque deuxième zone 30, 32, en cas de pluralité de volets d'obturation secondaires dans ladite deuxième zone, les deuxièmes axes de rotation B respectifs sont parallèles entre eux et s'étendent selon une unique deuxième direction de rotation pour chaque deuxième zone.

Pour chaque deuxième zone 30, 32, en cas d'unicité du volet d'obturation secondaire dans ladite deuxième zone, le deuxième axe de rotation B s'étend selon une deuxième direction de rotation.

La deuxième direction de rotation de chaque deuxième zone 30, 32 est distincte de la première direction de rotation.

Plus particulièrement, chaque deuxième direction de rotation forme avec la première direction de rotation un angle supérieur ou égal à 30°.

Les deuxièmes directions de rotation des différentes deuxièmes zones 30, 32 ne sont pas nécessairement identiques entre elles.

Dans le mode de réalisation représenté, les deuxièmes directions de rotation des zones latérales 30, 32 sont symétriques l'une par rapport à l'autre par rapport au plan médian P.

Pour chaque deuxième zone, la norme de la composante selon la direction d'élévation Z d'un vecteur de la deuxième direction de rotation est strictement supérieure à la norme de chacune des composantes du vecteur selon les directions longitudinale X et transversale Y, plus particulièrement strictement supérieure à la norme de l'addition des composantes du vecteur selon les directions longitudinale X et transversale Y.

Chaque deuxième direction de rotation forme avec la direction transversale Y un angle supérieur ou égal à 30°.

Dans l'exemple représenté, le deuxième axe de rotation B du volet d'obturation secondaire 36 est agencé à proximité du bord latéral de la zone latérale correspondante 30, 32.

Plus particulièrement, le deuxième axe de rotation B s'étend à moins de 40 mm selon la direction transversale Y du point de la zone latérale correspondante 30, 32 le plus éloigné du plan médian P selon la direction transversale Y.

Dans la position ouverte du ou des volets d'obturation secondaires 36 d'une zone latérale 30 comme visible sur la figure 3, l'ouverture 22 est au moins en partie ouverte dans la zone latérale 30, de telle sorte qu'un flux d'air peut circuler au travers de la zone latérale 30 de l'ouverture 22.

Dans le mode de réalisation représenté sur la figure 3, le flux d'air de chacune des zones latérales 30, 32 converge en direction du flux d'air de la zone centrale 28. Le flux d'air des zones latérales 30, 32 est, par exemple, également orienté vers le système de refroidissement du moteur.

Le volet 36 d'obturation secondaire sert ici de convergent pour canaliser le flux d'air dans la zone de refroidissement de la chaine de traction.

Dans la position d'obturation du ou des volets d'obturation secondaires 36 d'une zone latérale 30, 32 comme visible sur les figures 1 et 2, le ou l'ensemble des volets d'obturation secondaires 36 obture l'ensemble de la zone latérale 30, 32, c'est-à-dire ici entre une des baguettes d'interface 27, un des bords latéraux, le bord inférieur et le bord supérieure de l'ouverture 22.

Le ou les volets d'obturation secondaires 36 s'étendent dans l'espace, plan ou courbe, défini par l'ouverture dans la zone latérale 30, 32 correspondante.

Le ou les volets d'obturation secondaires présentent des éléments en creux 39 complémentaires de la grille 26 dans la zone latérale 30, 32 correspondante, de sorte qu'en position d'obturation du ou des volets d'obturation secondaires, la grille 26 s'étend dans les éléments en creux 39.

La grille 26 permet alors l'accostage du ou des volets d'obturation secondaires en position d'obturation.

Dans la position d'obturation, une face du volet d'obturation secondaire est orientée contre la direction du flux d'air. Cela permet avantageusement d'améliorer le coefficient de trainé Cx du véhicule dans la position d'obturation.

Alternativement, dans la position d'obturation, le ou l'ensemble des volets d'obturation secondaires obture seulement partiellement l'ensemble de la zone latérale 30, 32 correspondante, c'est-à-dire qu'un flux d'air peut circuler au travers de la zone latérale 30, 32, mais que le dispositif d'aération présente une surface de passage de l'air dans la zone latérale 30, 32 correspondante strictement inférieure à la surface de passage de l'air dans la zone latérale 30, 32 correspondante dans la position ouverte.

Il est défini un angle de rotation du volet d'obturation secondaire 36 entre la position ouverte et la position d'obturation autour du deuxième axe de rotation B.

Par exemple, l'angle de rotation est sensiblement égal à 90°.

La rotation de l'au moins un volet d'obturation secondaire 36 d'une première des deuxièmes zones 30, 32 est actionnable indépendamment de la rotation de l'au moins un volet d'obturation secondaire 36 d'une deuxième des deuxièmes zones 30, 32, et inversement.

Dans l'exemple représenté, cela signifie notamment que l'au moins un volet d'obturation secondaire 36 d'une première des zones latérales 30, 32 est apte à être en position d'obturation, alors que l'au moins un volet d'obturation secondaire 36 de la deuxième des zones latérales 30, 32 est en position ouverte.

Alternativement, la rotation des volets d'obturation secondaire 36 des zones latérales 30, 32 est synchronisée, de sorte que les volets d'obturation secondaire 36 des zones latérales 30, 32 s'étendent symétriquement les uns par rapport aux autres par rapport au plan médian P.

Le volet d'obturation secondaire 36 est, par exemple, en un polymère.

En variante, le volet d'obturation secondaire 36 est en métal.

Le dispositif d'obturation comprend avantageusement ici au moins un deuxième système d'actionnement 40 prévu pour contrôler la rotation d'un ou de volets d'obturation secondaires 36.

Dans le mode de réalisation représenté, le dispositif d'obturation comprend un unique deuxième système d'actionnement 40 par deuxième zone 30, 32 prévu pour contrôler la rotation de l'unique volet d'obturation secondaire 36 de ladite deuxième zone 30, 32.

Dans un mode de réalisation dans lequel le dispositif d'obturation comprend plusieurs volets d'obturation secondaires dans une deuxième zone, le deuxième système d'actionnement contrôle, par exemple, un des volets d'obturation secondaires de ladite deuxième zone, les autres volets d'obturation secondaires de ladite deuxième zone étant entraînés par ledit volet d'obturation secondaire par des éléments de connexion reliant les volets d'obturation secondaires entre eux. Alternativement, chaque volet d'obturation secondaire est contrôlé par un deuxième système d'actionnement respectif.

Dans leur positions d'obturation respectives, les volets d'obturation principal et secondaire définissent une surface extérieure du dispositif d'obturation, aussi appelée « peau extérieure ». La peau extérieure s'étend par exemple dans la continuité de la surface extérieure de la pièce du véhicule sur laquelle le dispositif d'obturation est monté de sorte à offrir une esthétique satisfaisante du dispositif d'obturation et de son environnement.

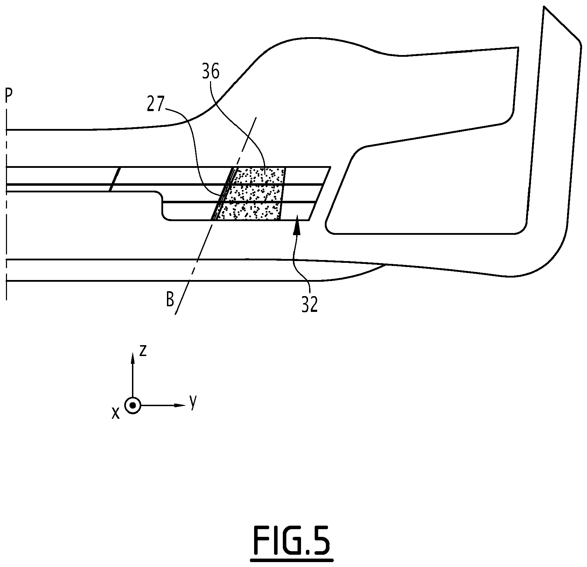

Un deuxième mode de réalisation de l'invention est représenté sur la figure 5.

Seules les caractéristiques par lesquelles ce mode de réalisation diffère du premier mode de réalisation seront décrites ici.

Les éléments identiques ou similaires ont des références numériques correspondant aux références du premier mode de réalisation.

Le deuxième mode de réalisation diffère uniquement dans la position du deuxième axe de rotation B du volet d'obturation secondaire 36 pour chacune des zones latérales 30, 32.

Pour chaque zone latérale 30, 32, le deuxième axe de rotation B s'étend parallèlement à la baguette d'interface 27 de la zone latérale correspondante.

Le deuxième axe de rotation B s'étend à moins de 5 centimètres, préférentiellement à moins de 40 mm, selon la direction transversale Y de la baguette d'interface 27 correspondante.

Les deuxièmes directions de rotation des zones latérales 30, 32 sont symétriques l'une par rapport à l'autre par rapport au plan médian P.

Dans la position ouverte, le flux d'air de chacune des zones latérales 30, 32 diverge par rapport au flux d'air de la zone centrale 28 selon la direction transversale Y. Le flux d'air des zones latérales 30, 32 est, par exemple, orienté vers le système de climatisation, le système de freinage et/ou le système de refroidissement de batteries de traction, de manière à participer à la régulation thermique de ces systèmes.

Une telle configuration permet donc en outre une régulation thermique d'autres éléments que d'un moteur situé en arrière de la zone centrale 28 selon la direction longitudinale X en orientant le flux d'air des zones latérales 30, 32 de manière divergente.

Dans une première variante non représentée, le dispositif d'aération comprend deux zones centrales situées de part et d'autre du plan médian P. Elles sont, par exemple, symétriques l'une par rapport à l'autre selon le plan médian P.

Dans un mode de réalisation, la première direction de rotation de l'une des zones centrales est colinéaire de la première direction de rotation de l'autre des zones centrales. Plus particulièrement, la première direction de rotation de chacune des zones centrales correspond sensiblement à la direction transversale Y.

Alternativement, la première direction de rotation de l'une des zones centrales n'est pas colinéaire de la première direction de rotation de l'autre des zones centrales. Les premières directions de rotation de chacune des zones centrales sont symétriques l'une par rapport à l'autre par rapport au plan médian P.

Dans une deuxième variante non représentée, pour chaque deuxième zone, la norme de la composante selon la direction transversale Y d'un vecteur de la deuxième direction de rotation est strictement supérieure à la norme de chacune des composantes du vecteur selon les directions longitudinale X et d'élévation Z, plus particulièrement strictement supérieure à la norme de l'addition des composantes du vecteur selon les directions longitudinale X et d'élévation Z.

Chaque deuxième direction de rotation forme avec la direction transversale Y un angle supérieur ou égal à 30°.

Un dispositif d'aération de l'invention permet donc de prévoir des agencements des différentes zones de manière à respecter la courbure d'une peau de pare-chocs ou une grille présentent une courbure. Cela permet donc une intégration dudit dispositif d'aération dans la peau de pare-chocs ou la grille.

Cela offre en outre un rendu esthétique depuis l'extérieur du véhicule satisfaisant.

Par ailleurs, un tel dispositif permet de gérer des flux d'air selon différentes directions et, ainsi, une gestion améliorée de la température du moteur et/ou d'autres éléments que le moteur.

## Revendications

1. Dispositif d'aération (16) pour un véhicule comprenant un cadre (18) définissant une ouverture (22) et un dispositif d'obturation (20) de l'ouverture (22), le dispositif d'aération (16) présentant une première zone (28), le dispositif d'obturation (20) comprenant au moins un volet d'obturation principal (34) apte à obturer la première zone (28), l'au moins un volet d'obturation principal (34) étant apte à entrer en rotation autour d'un premier axe de rotation (A) s'étendant selon une unique première direction de rotation,
**caractérisé en ce que** le dispositif d'aération (16) présente deux deuxièmes zones (30, 32), la première zone (28) étant une zone centrale, les deux deuxièmes zones (30, 32) étant des zones latérales situées de part et d'autre de la zone centrale (28) selon une direction transversale (Y), le dispositif d'obturation comprenant au moins un volet d'obturation secondaire (36) apte à obturer les deuxièmes zones (30, 32), l'au moins un volet d'obturation secondaire (36) étant apte à entrer en rotation autour d'un deuxième axe de rotation (B) s'étendant selon une unique deuxième direction de rotation pour chaque deuxième zone (30, 32), la deuxième direction de rotation de chaque deuxième zone (30, 32) étant distincte de la première direction de rotation, la norme de la composante selon une direction d'élévation (Z) d'un vecteur de la deuxième direction de rotation étant strictement supérieure à la norme de chacune des composantes du vecteur selon des directions orthogonales (X, Y) à la direction d'élévation (Z) pour chaque deuxième zone (30, 32).

2. Dispositif d'aération selon la revendication 1, dans lequel la rotation de l'au moins un volet d'obturation secondaire (36) apte à obturer une première des zones latérales (30, 32) est actionnable indépendamment de la rotation de l'au moins un volet d'obturation secondaire (36) apte à obturer une deuxième des zones latérales (30, 32).

3. Dispositif d'aération selon la revendication 1 ou 2, présentant un plan médian (P) de symétrie perpendiculaire à une direction transversale (Y).

4. Dispositif d'aération selon l'une quelconque des revendications 1 à 3, dans lequel la première direction de rotation est parallèle à une direction transversale (Y) à 5° près.

5. Dispositif d'aération selon l'une quelconque des revendications 1 à 4, dans lequel la norme de la composante selon une direction d'élévation (Z) d'un vecteur de la deuxième direction de rotation est strictement supérieure à la norme de l'addition des composantes du vecteur selon les directions orthogonales (X, Y) à la direction d'élévation (Z).

6. Dispositif d'aération selon l'une quelconque des revendications 1 à 5, dans lequel la rotation de l'au moins un volet d'obturation principal (34) est contrôlé par au moins un premier système d'actionnement (38), la rotation de l'au moins un volet d'obturation secondaire (36) étant contrôlé par au moins un deuxième système d'actionnement (40).

7. Dispositif d'aération selon l'une quelconque des revendications 1 à 6, dans lequel l'au moins un volet d'obturation principal (34) est incurvé et/ou l'au moins un volet d'obturation secondaire (36) est incurvé.

8. Véhicule comprenant un dispositif d'aération (16) selon l'une quelconque des revendications 1 à 7.

9. Véhicule selon la revendication 8, dans lequel le dispositif d'aération (16) définit une surface externe du véhicule, la surface externe étant visible depuis l'extérieur du véhicule.

## Patentansprüche

1. Belüftungsvorrichtung (16) für ein Fahrzeug, umfassend einen Rahmen (18), der eine Öffnung (22) definiert, und eine Verschlussvorrichtung (20) der Öffnung (22), wobei die Belüftungsvorrichtung (16) einen ersten Bereich (28) aufweist, die Verschlussvorrichtung (20) umfassend mindestens eine Hauptverschlussklappe (34), die geeignet ist, um den ersten Bereich (28) zu verschließen, wobei die mindestens eine Hauptverschlussklappe (34) geeignet ist, um eine erste Drehachse (A), die sich entlang einer einzigen ersten Drehrichtung erstreckt, in Drehung versetzt zu werden,
**dadurch gekennzeichnet, dass** die Belüftungsvorrichtung (16) zwei zweite Bereiche (30, 32) aufweist, wobei der erste Bereich (28) ein mittlerer Bereich ist, die zwei zweiten Bereiche (30, 32) seitliche Bereiche sind, die sich auf beiden Seiten des mittleren Bereichs (28) in einer Querrichtung (Y) befinden, wobei die Verschlussvorrichtung mindestens eine sekundäre Verschlussklappe (36) umfasst, die geeignet ist, um die zweiten Bereiche (30, 32) zu verschließen, wobei die mindestens eine sekundäre Verschlussklappe (36) um eine zweite Drehachse (B) in Drehung versetzt werden kann, die sich entlang einer einzigen zweiten Drehrichtung für jeden zweiten Bereich (30, 32) erstreckt, wobei die zweite Drehrichtung von jedem zweiten Bereich (30, 32) von der ersten Drehrichtung verschieden ist,
wobei die Norm der Komponente entlang einer Erhebungsrichtung (Z) eines Vektors der zweiten Drehrichtung strikt größer ist als die Norm von jeder der Komponenten des Vektors entlang Richtungen (X, Y), die orthogonal zu der Erhebungsrichtung (Z) sind, für jeden zweiten Bereich (30, 32).

2. Belüftungsvorrichtung nach Anspruch 1, wobei die Drehung der mindestens einen sekundären Verschlussklappe (36), die geeignet ist, einen ersten der Seitenbereiche (30, 32) zu verschließen, unabhängig von der Drehung der mindestens einen sekundären Verschlussklappe (36), die geeignet ist, einen zweiten der Seitenbereiche (30, 32) zu verschließen, betätigt werden kann.

3. Belüftungsvorrichtung nach Anspruch 1 oder 2, die eine mittlere Symmetrieebene (P) aufweist, die senkrecht zu einer Querrichtung (Y) ist.

4. Belüftungsvorrichtung nach einem der Ansprüche 1 bis 3, wobei die erste Drehrichtung innerhalb von 5° parallel zu einer Querrichtung (Y) ist.

5. Belüftungsvorrichtung nach einem der Ansprüche 1 bis 4, wobei die Norm der Komponente entlang einer Erhebungsrichtung (Z) eines Vektors der zweiten Drehrichtung strikt größer ist als die Norm der Addition der Komponenten des Vektors entlang der Richtungen (X, Y), die orthogonal zu der Erhebungsrichtung (Z) sind.

6. Belüftungsvorrichtung nach einem der Ansprüche 1 bis 5, wobei die Drehung der mindestens einen Hauptverschlussklappe (34) durch mindestens ein erstes Betätigungssystem (38) gesteuert wird, wobei die Drehung der mindestens einen sekundäre Verschlussklappe (36) durch mindestens ein zweites Betätigungssystem (40) gesteuert wird.

7. Belüftungsvorrichtung nach einem der Ansprüche 1 bis 6, wobei die mindestens eine Hauptverschlussklappe (34) gekrümmt ist und/oder die mindestens eine sekundäre Verschlussklappe (36) gekrümmt ist.

8. Fahrzeug, umfassend eine Belüftungsvorrichtung (16) nach einem der Ansprüche 1 bis 7.

9. Fahrzeug nach Anspruch 8, wobei die Belüftungsvorrichtung (16) eine Außenfläche des Fahrzeugs definiert, wobei die Außenfläche von der Außenseite des Fahrzeugs sichtbar ist.

## Claims

1. A ventilation device (16) for a vehicle comprising a frame (18) defining an opening (22) and a closing device (20) of the opening (22), the ventilation device (16) having a first zone (28), the closing device (20) comprising at least one main closing flap (34) able to close off the first zone (28), the at least one main closing flap (34) being able to rotate about a first axis of rotation (A) extending along a single first direction of rotation,
**characterized in that** the ventilation device (16) has two second zone (30, 32), the first zone (28) being a central zone, the two second zones (30, 32) being side zones located on either side of the central zone (28) in a transverse direction (Y), the closing device comprising at least one secondary closing flap (36) able to close off the second zones (30, 32), the at least one secondary closing flap (36) being able to rotate about a second axis of rotation (B) extending along a single second direction of rotation for each second zone (30, 32), the second direction of rotation of each second zone (30, 32) being separate from the first direction of rotation,
the norm of the component in an elevation direction (Z) of a vector of the second direction of rotation being strictly greater than the norm of each of the components of the vector in directions orthogonal (X, Y) to the elevation direction (Z) for each second zone (30, 32).

2. The ventilation device according to claim 1, wherein the rotation of the at least one secondary closing flap (36) able to close off a first of the side zones (30, 32) can be actuated independently of the rotation of the at least one secondary closing flap (36) able to close off a second of the side zones (30, 32).

3. The ventilation device according to claim 1 or 2, having a median plane (P) of symmetry perpendicular to a transverse direction (Y).

4. The ventilation device according to any one of claims 1 to 3, wherein the first direction of rotation is parallel to a transverse direction (Y) to within 5°.

5. The ventilation device according to any one of claims 1 to 4, wherein the norm of the component in an elevation direction (Z) of a vector of the second direction of rotation is strictly greater than the norm of the addition of the components of the vector in the directions orthogonal (X, Y) to the elevation direction (Z).

6. The ventilation direction according to any one of claims 1 to 5, wherein the rotation of the at least one main closing flap (34) is controlled by at least one first actuating system (38), the rotation of the at least one secondary closing flap (36) being controlled by at least one second actuating system (40).

7. The ventilation device according to any one of claims 1 to 6, wherein the at least one main closing flap (34) is curved and/or the at least one secondary closing flap (36) is curved.

8. A vehicle comprising a ventilation device (16) according to any one of claims 1 to 7.

9. The vehicle according to claim 8, wherein the ventilation device (16) defines an outer surface of the vehicle, the outer surface being visible from the outside of the vehicle.
